# EUROPÄISCHE PATENTSCHRIFT

(11) **EP 1 090 510 B1**
(45) Veröffentlichungstag und Bekanntmachung des Hinweises auf die Patenterteilung: **12.03.2003**
(21) Anmeldenummer: 98959857.8
(22) Anmeldetag: 06.11.1998
(51) Int. Cl.: H04N 13/04

(54) **VERFAHREN UND VORRICHTUNG ZUR AUTOSTEREOSKOPIE**
METHOD AND DEVICE FOR AUTOSTEREOSCOPY
PROCEDE ET DISPOSITIF D'AUTOSTEREOSCOPIE

(30) Priorität: 20.06.1998 DE 19827590
(43) Veröffentlichungstag der Anmeldung: 11.04.2001
(73) Patentinhaber: Grossmann, Christoph, 20149 Hamburg (DE)
(72) Erfinder: Grossmann, Christoph, 20149 Hamburg (DE)
(74) Vertreter: TER MEER STEINMEISTER & PARTNER GbR
(86) Internationale Anmeldenummer: EP9807095
(87) Internationale Veröffentlichungsnummer: WO99067956

(56) Entgegenhaltungen:
- EP-A- 0 540 137
- EP-A- 0 744 872

## Beschreibung

Die Erfindung betrifft ein Verfahren zur autostereoskopischen Darstellung von Bildern auf einem Bildschirm, bei dem die Bildinformation für das rechte und das linke Auge eines Betrachters segmentweise verschachtelt auf dem Bildschirm dargestellt wird und eine Barriere so angeordnet wird, daß für jedes Auge jeweils nur die zugehörige Bildinformation sichtbar ist.

Solche Verfahren dienen beispielsweise dazu, dem Benutzer eines Computers auf dem Computerbildschirm ein räumlich wirkendes Bild darzustellen.

Das Grundprinzip der stereoskopischen Darstellung von Bildern besteht darin, daß auf dem Bildschirm entweder gleichzeitig (Raum-Multiplex) oder zeitversetzt mit rascher Bildwechselfolge (Zeit-Multiplex) verschiedene Teilbilder dargestellt werden, die jeweils dasselbe Objekt aus unterschiedlichen Ansichtsrichtungen zeigen und die jeweils nur dann sichtbar sind, wenn der Bildschirm aus einer entsprechenden Ansichtsrichtung betrachtet wird. Wenn das Bild nur von einem einzigen Benutzer aus einer festen Betrachtungsposition betrachtet wird, genügt die Darstellung von zwei Halbbildern, die der Bildinformation für das linke und das rechte Auge entsprechen.

Bei einigen bekannten Systemen erfolgt die Trennung der Bildinformation für das rechte und das linke Auge mit Hilfe geeigneter Brillen wie beispielsweise Shutterbrillen oder Polarisationsbrillen. Diese Systeme haben jedoch den Nachteil. daß der Benutzer durch das Tragen der Brille beeinträchtigt wird. Autostereoskopische Verfahren und Vorrichtungen haben dem gegenüber den Vorteil. daß der räumliche Eindruck "mit unbewaffnetem Auge" wahrgenommen werden kann. In diesem Fall wird durch eine sogenannte Parallaxen-Barriere, im folgenden kurz als "Barriere" bezeichnet, sichergestellt, daß das für das rechte Auge vorgesehene Halbbild für das linke Auge unsichtbar ist und umgekehrt. Die Barriere kann beispielswelse durch ein vor dem Bildschirm angeordnetes Linsen- oder Prismenraster oder durch ein Blendenraster gebildet werden. Das Blendenraster kann unter Umständen, etwa bei Durchlicht-LCD-Bildschirmen oder bei Rückprojektions-Bildschirmen auch hinter dem Bildschirm angeordnet sein.

Bei bekannten autostereoskopischen Verfahren, bei denen als Bildschirm ein Rasterschirm mit einem bestimmten Pixelraster verwendet wird, wie es etwa bei üblichen Kathodenstrahlbildröhrern oder Flüssigkristall- (LCD-) Bildschirmen der Fall ist, und bei denen die Halbbilder für das rechte und das linke Auge segmentweise ineinander verschachtelt sind, haben die Segmente generell die Breite eines einzigen Bildschirmpixels. Wenn also die Pixel einer Bildschirmzeile fortlaufend numeriert werden, bilden beispielsweise alle ungeradzahligen Pixel das Halbbild für das linke Auge und alle geradzahligen Pixel das Halbbild für das rechte Auge. Diese bekannten Systeme reagieren grundsätzlich sehr empfindlich auf Änderungen der Betrachtungsposition. Wenn der Benutzer den Kopf nur geringfügig zur Seite bewegt oder den Betrachtungsabstand geringfügig verändert, geht die korrekte Zuordnung zwischen den Bildschirmpixeln und den Augen des Betrachters und damit auch der räumliche Bildeindruck verloren.

Aus DE 195 00 699 A1 ist ein Verfahren der eingangs genannten Art bekannt, bei dem die Betrachtungsposition fortlaufend mit Hilfe eines Head- oder Eye-Tracking-Systems überwacht wird und im Falle einer Änderung der Betrachtungsposition automatisch die Barriere nachjustiert wird. Das Nachjustieren erfolgt beispielsweise bei einer als Prismenraster ausgebildeten Barriere dadurch, daß die Barriere mechanisch bewegt wird. Sofern die Barriere durch ein vor den Bildschirm vorgesetztes Linienschattenraster-LCD gebildet wird. kann das Nachjustieren auch elektronisch durch geeignete Ansteuerung dieses LCD's erfolgen. Auch bei diesem bekannten Verfahren ist jedoch eine hohe Präzision bei der Gestaltung und Justierung der Barriere erforderlich, damit eine saubere Kanaltrennung erreicht wird. Ein besonderes Problem besteht darin, daß bei den meisten heute gebräuchlichen Computerbildschirmen. insbesondere bei Kathodenstrahlbildröhren, die Bildschirmfläche nicht vollkommen flach, sondern leicht gewölbt ist. Hierdurch ergeben sich Verzerrungen, die durch eine entsprechende Anpassung der Barriere kaum zu beherrschen sind. Ein weiteres Problem besteht darin, daß das Head- oder Eye-Tracking-System und das nachgeschaltete Justiersystem für die Barriere mit einer gewissen Verzögerung arbeiten, so daß die Qualität der räumlichen Bildwiedergabe nicht permanent aufrechterhalten werden kann, wenn sich der Betrachter bewegt.

In EP-A-0 744 872 sowie in einer älteren Patentanmeldung des Anmelders (DE 197 28 526 A1, veröffentlicht am 24.12.1998) wird bereits ein Verfahren vorgeschlagen, bei dem die ineinander verschachtelten Segmente auf dem Bildschirm jeweils eine Breite von mehreren Pixeln haben. Dies hat den Vorteil, daß bei einer nicht exakten Kanaltrennung nur die Pixel an den Rändern der Segmente von Übersprechen oder Cross-Talk betroffen sind, so daß insgesamt eine größere Toleranz gegenüber Positionsänderungen des Betrachters erreicht wird. Außerdem besteht die Möglichkeit, Änderungen des Betrachtungsabstands sehr rasch und ohne mechanisch bewegliche Teile dadurch zu kompensieren, daß die Breite der Segmente entsprechend angepaßt wird. Ebenso können durch geeignete Wahl der Breite der Segmente auch Effekte kompensiert werden, die durch die Bildschirmwölbung entstehen. Hieraus ergibt sich die vorteilhafte Möglichkeit, bestehende Computerbildschirme kostengünstig mit einer Autostereoskopie-Vorrichtung nachzurüsten.

In der genannten älteren Anmeldung wird auch bereits vorgeschlagen, die Breite der jeweils für ein Auge unsichtbaren Segmente auf Kosten der Breite der sichtbaren Segmente zu vergrößern, um so einen gewissen "Sicherheitsabstand" und damit eine sauberere Kanaltrennung zu erreichen.

Aufgabe der vorliegenden Erfindung ist es, die Toleranz gegenüber Positionsänderungen des Betrachters weiter zu verbessern.

Diese Aufgabe wird bei einem Verfahren nach dem Oberbegriff des Anspruchs 1 dadurch gelöst, daß in jedem Segment zusätzlich zu der diesem Segment zugeordneten Bildinformation eine Kopie eines Teils der Bildinformation dargestellt wird, die einem oder beiden benachbarten Segmenten für dasselbe Auge zugeordnet ist.

Auch bei dieser Lösung besteht somit die in jedem einzelnen Segment dargestellten Information aus mehreren in Zeilenrichtung nebeneinanderliegenden Pixeln. Die Vorteile des in der älteren Anmeldung vorgeschlagenen Systems gelten deshalb entsprechend auch für den Gegenstand der vorliegenden Erfindung. Die Besonderheit bei der erfindungsgemäßen Lösung besteht jedoch darin, daß die zu einem gegebenen Zeitpunkt auf dem Bildschirm dargestellte Information zu einem gewissen Grad redundant ist. Hierdurch gelingt es, jedem Auge des Betrachters auch dann die richtige und vollständige Bildinformation darzubieten, wenn die Betrachtungsposition innerhalb gewisser Grenzen variiert wird, ohne daß die Barriere nachjustiert wird.

Vorteilhafte Ausgestaltungen der Erfindung ergeben sich aus den Unteransprüchen.

Auch bei dem erfindungsgemäßen Verfahren wird vorzugsweise die Position des Kopfes oder der Augen des Betrachters verfolgt, und die Barriere und/oder der Bildschirminhalt werden automatisch angepaßt. Unvermeidliche zeitliche Verzögerungen bei dieser Anpassung führen wegen der erwähnten Redundanz des Systems nicht zu einem vorübergehenden Informationsverlust. Die Anpassungsvorgänge erfolgen gewissermaßen im Hintergrund und für den Betrachter unsichtbar, so daß auch bei schnelleren Kopfbewegungen ein räumliches Bild in gleichbleibend guter Qualität gewahrleistet wird.

Eine Vorrichtung zur Durchführung des Verfahrens und zweckmäßige Ausgestaltungen dieser Vorrichtung sind Gegenstand der Vorrichtungsansprüche.

Die Verwendung einer Barriere in der Form eines Linsenrasters, beispielsweise eines Rasters aus vertikal verlaufenden Zylinderlinsen, hat den Vorteil, daß eine hohe Lichtstarke erreicht wird und kein aufwendiges Treibersystem für die Barriere benötigt wird. Die Anpassung an Positionsänderungen des Betrachters erfolgt in diesem Fall allein durch Anpassung der auf dem Bildschirm dargestellten Bildinformation.

Die Zylinderlinsen verursachen einen gewissen Astigmatismus. Dies erweist sich jedoch bei dem erfindungsgemäßen System nicht als Nachteil, sondern als Vorteil, weil es dadurch möglich ist, ein als Akkommodations-Konvergenz-Problem bekanntes Problem zu vermeiden oder zumindest zu mildern. Dieses Problem besteht kurz gefaßt darin, daß das menschliche visuelle System Informationen über die Entfernung eines bestimmten Punktes des betrachteten Objektes nicht nur aus der unterschiedlichen Parallaxe der Halbbilder für das linke und rechte Auge, sondern auch aus der Akkommodation der Augenlinse gewinnt, die zur Scharfstellung des Bildes erforderlich ist. Wenn der Punkt des Objekts aufgrund der Parallaxe vor oder hinter der Bildschirmebene zu liegen scheint, stehen diese beiden Entfernungsinformationen zueinander in Widerspruch, so daß das visuelle System irritiert wird. Der erwähnte Astigmatismus führt nun dazu, daß sich aus der Akkomodation der Augenlinse ohnehin keine eindeutige Entfernungsinformation herleiten läßt, so daß der Widerspruch aufgelöst oder gemildert wird.

Ein weiterer Effekt der Verwendung von Zylinderlinsen besteht darin, daß die sichtbaren Teile des Bildschirms für den Betrachter in Zeilenrichtung vergrößert erscheinen. Das auf dem Bildschirm dargestellte Bild muß deshalb vorab entsprechend diesem Vergrößerungsfaktor gestaucht oder komprimiert werden. Da die Auflösung des Rasterbildschirms begrenzt ist, führt dies zwangsläufig zu einem gewissen Verlust an Auflösung in Zeilenrichtung. Gemäß einer Weiterbildung der Erfindung wird zumindest bei Farbbildschirmen mit in Zeilenrichtung versetzt angeordneten Farbpixeln eine Möglichkeit geschaffen, diesen Verlust an Auflösung teilweise zu kompensieren.

Dies wird dadurch erreicht, daß die Bildinformation für drei nebeneinander liegende Farbtripletts im Zeitmultiplex-Verfahren auf dem Bildschirm dargestellt wird, wobei die drei Farbpixel, die zur Darstellung eines Farbtripletts zusammengefaßt werden, jeweils um ein Farbpixel gegeneinander versetzt sind.

Zur Darstellung eines Farbtripletts werden somit wie üblich jeweils drei benachbarte Farbpixel benutzt, und zwar je eines in jeder der drei Grundfarben, so daß der Farbton des durch dieses Triplett repräsentieren Bildpunktes korrekt wiedergegeben werden kann. Da jedoch bei der zeitversetzten Wiedergabe der Farbtripletts nicht immer dieselben drei Farbpixel benutzt werden, sondern die Gruppe der drei Farbpixel jeweils um ein Farbpixel versetzt wird, sind auch die Schwerpunkte der drei nacheinander wiedergegebenen Farbtripletts in entsprechender Weise gegeneinander versetzt, so daß die in den drei Farbpixeln enthaltene räumliche Information nicht verloren geht. Nach Rückvergrößerung mit Hilfe der Zylinderlinsen ist somit die räumliche Information wieder verfügbar.

Im folgenden werden Ausführungsbeispiele der Erfindung anhand der Zeichnung näher erläutert.

Es zeigen:
- Fig. 1: einen Blockdiagramm der erfindungsgemäßen Vorrichtung;
- Fig. 2 und 3: schematische Darstellungen zur Erläuterung der optischen Eigenschaften der Vorrichtung:
- Fig. 4 und 5: Diagramme zur Erläuterung einer ersten Ausführungsform des erfindungsgemäßen Verfahrens;
- Fig. 6 und 7: Diagramme zur Erläuterung einer zweiten Ausführungsform des Verfahrens; und
- Fig. 8: ein Diagramm zur Erläuterung eines Verfahrens zur Verbesserung der räumlichen Auflösung.

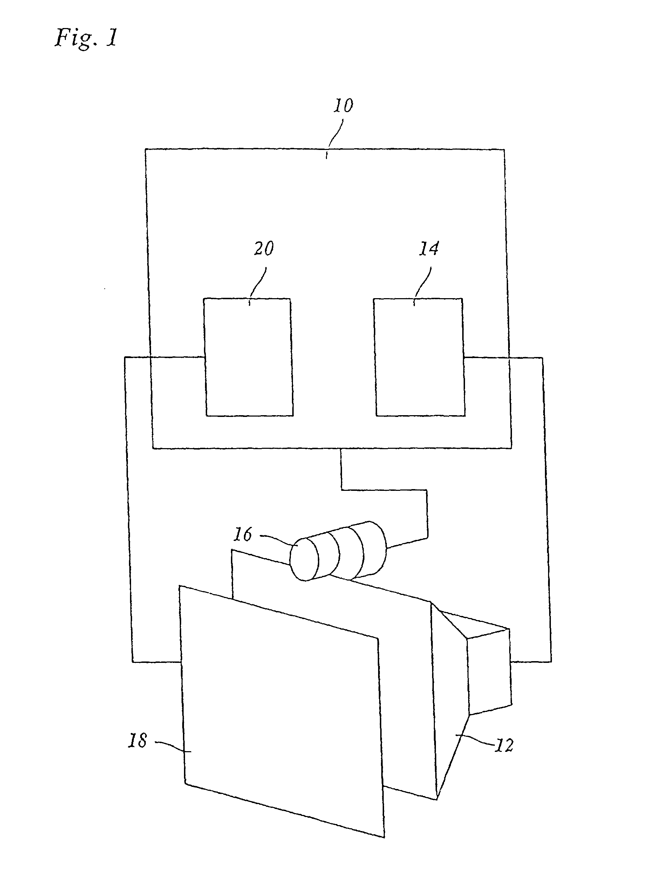

Die in Figur 1 gezeigte Vorrichtung zur autostereoskopischen Darstellung von Bildern umfaßt ein Computersystem 10, einen Bildschirm 12, beispielsweise einen CRT- oder LCD-Bildschirm, der über eine Graphikkarte 14 des Computersystems angesteuert wird, ein Head-Tracking-System oder Eye-Tracking-System16 und eine Barriere 18, die im gezeigten Beispiel in Abstand vor dem Bildschirm 12 angeordnet ist. Bei der Barriere 18 kann es sich beispielsweise um eine Linsenrasterfolie handeln. Wahlweise kann die Barriere jedoch auch durch einen LCD-Schirm gebildet werden, mit dem durch geeignete Ansteuerung ein Muster abwechselnder transparenter und nichttransparenter Streifen erzeugt werden kann. Im letzteren Fall enthält das Computersystem 10 zusätzlich ein Treibersystem 20 zur Ansteuerung des LCD-Schirms.

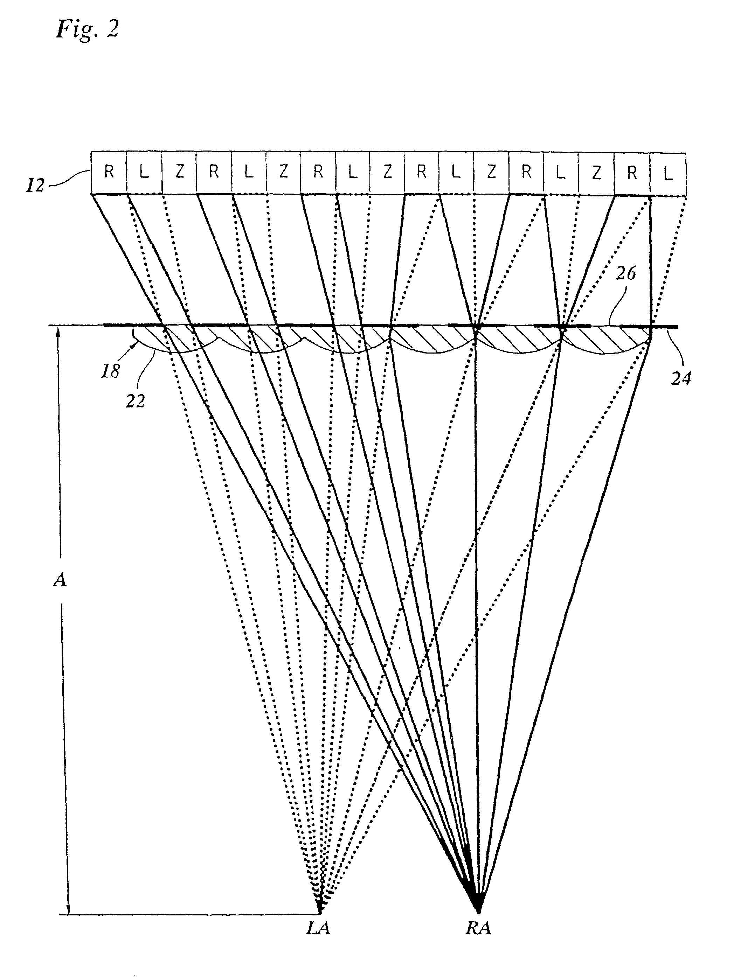

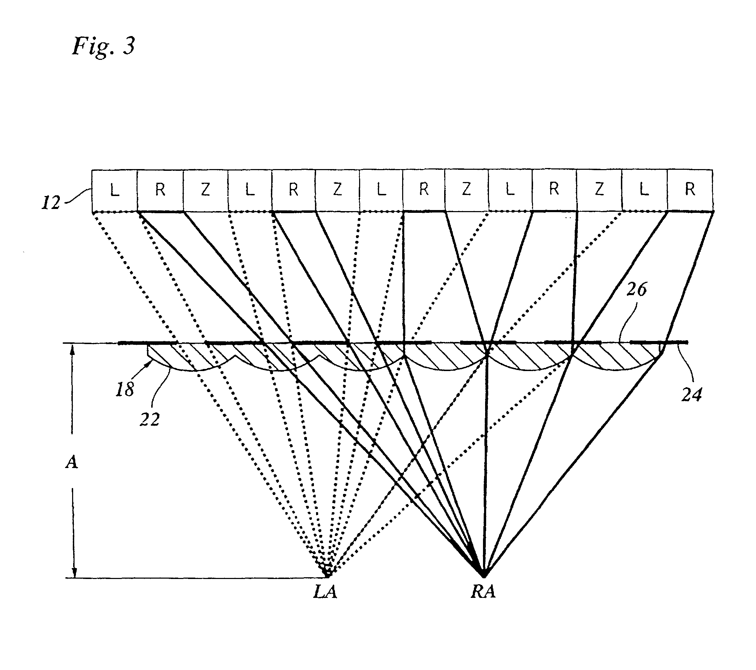

Zur Erläuterung des Funktionsprinzips der Erfindung anhand der Figuren 2 bis 4 soll zunächst davon ausgegangen werden, daß es sich bei der Barriere 18 um ein Linsenraster mit einer Vielzahl vertikaler Zylinderlinsen 22 handelt. Das Linsenraster 18 ist in einem festen Abstand vor dem Bildschirm 12 angeordnet, der in Figuren 2 und 3 durch einen mehrere Zonen R. L. Z aufgeteilten Balken repräsentiert wird. Die Positionen der linken und rechten Augen des Betrachters sind mit LA und RA bezeichnet.

Bei den Zonen R auf dem Bildschirm 12 handelt es sich um diejenigen Zonen, die vom rechten Auge RA jeweils durch eine einzelne Zylinderlinse 22 vergrößert gesehen werden. Entsprechend nimmt das linke Auge LA vergrößert die Zonen L auf dem Bildschirm wahr. Bei den Zonen Z handelt es sich um Zwischenzonen, die weder für das linke noch für das rechte Auge wahrnehmbar sind.

In Figuren 2 und 3 ist in der Ebene des Linsenrasters 18 zusätzlich eine Folge von Blenden 24 dargestellt, zwischen denen Schlitze 26 gebildet werden. Die Blenden und Schlitze symbolisieren transparente und nichttransparente vertikale Streifen einer Maske, die dasselbe Muster von Zonen R, L, Z hervorrufen würde wie das Linsenraster 18.

In Figuren 2 und 3 ist jeweils für die rechte Hälfte des Bildschirms 12 der Strahlengang des Linsenrasters 18 dargestellt. Dabei sind die vom linken Auge ausgehenden Sehstrahlen durch gestrichelte Linien und die vom rechten Auge ausgehenden Sehstrahlen durch durchgezogene Linien repräsentiert. Für die rechte Hälfte des Bildschirms ist jeweils der äquivalente Strahlengang für die Maske 24, 26 dargestellt. Dieser Strahlengang dient lediglich dazu, die geometrischen Verhältnisse übersichtlicher darzustellen, da hier die Brechungseigenschaften der Zylinderlinsen nicht in Betracht gezogen zu werden brauchen.

Im gezeigten Beispiel wird von einem flachen Bildschirm 12 ausgegangen. Unter diesen Umständen haben alle Blenden 24 dieselbe Breite, und auch die zwischen ihnen gebildeten Schlitze 26 haben alle dieselbe Breite. Wenn der Bildschirm 12 gewölbt wäre, ließe sich durch Verändern der Breite der Schlitze und Blenden bzw. durch Änderung der Geometrie der Zylinderlinsen 22 erreichen, daß das Muster der Zonen R. L und Z auf dem Bildschirm dieselbe Form wie bei einem flachen Bildschirm annimmt. Bei einem nur Eindimensional gewölbten Bildschirm könnte das durch eine Folie gebildete Linsenraster 18 auch dieser Wölbung folgen. Die Brennweite der einzelnen Zylinderlinsen 22 ist ggf. an den längs der jeweiligen optischen Achse gemessenen Abstand zwischen Linsenraster und Bildschirm anzupassen.

Im gezeigten Beispiel verhält sich die Breite der Blenden 24 zur Breite der Schlitze 26 wie 2:1. Als Rastermaß des Blendenrasters soll die Summe aus der Breite einer einzelnen Blende 24 und der Breite eines einzelnen Schlitzes 26 bezeichnet werden. Dieses Rastermaß ist gleich dem Rastermaß des Linsenrasters 18, d.h., gleich der Breite einer einzelnen Zylinderlinse 22. Dividiert man das Rastermaß durch die Breite eines einzelnen Schlitzes 26, so erhält man im gezeigten Beispiel den Wert 3. Dieser Wert wird als "Selektionszahl" des Blendenrasters bezeichnet. Aufgrund der Äquivalenz zwischen Blendenraster und Linsenraster kann entsprechend auch die Selektionszahl des Linsenrasters 18 definiert werden. Auch die Selektionszahl des Linsenrasters hat im gezeigten Beispiel also den Wert 3. Unter diesen Umständen beträgt die Gesamtbreite der unsichtbaren Zonen Z auf dem Bildschirm genau ein Drittel der Zeilenlänge, d.h., ein Drittel der Bildschirmzeile ist für den Betrachter völlig unsichtbar.

In Fig. 2 hat der Betrachtungsabstand A, d.h., der Abstand zwischen der Ebene des Linsenrasters 18 und der Ebene der Augen LA, RA den maximal möglichen Wert, bei dem sich die Zonen R und L auf dem Bildschirm noch nicht überlappen. Bei einem größeren Betrachtungsabstand wäre keine vollständige Kanaltrennung mehr gewährleistet, da die in der Überlappungszone liegenden Bildschirmpixel sowohl für das linke Auge als auch für das rechte Auge sichtbar wären.

In Fig. 3 hat der Betrachtungsabstand A den minimal möglichen Wert. Bei einem noch kleineren Betrachtungsabstand würden die Zonen L und R auf dem Bildschirm wiederum überlappen. Je größer die Selektionszahl des Linsenrasters oder allgemein der Barriere 18 ist. desto größer ist auch die Breite der Zonen Z, und desto größer ist entsprechend der Bereich, in dem der Betrachtungsabstand A variieren kann, ohne daß die Kanaltrennung beeinträchtigt wird.

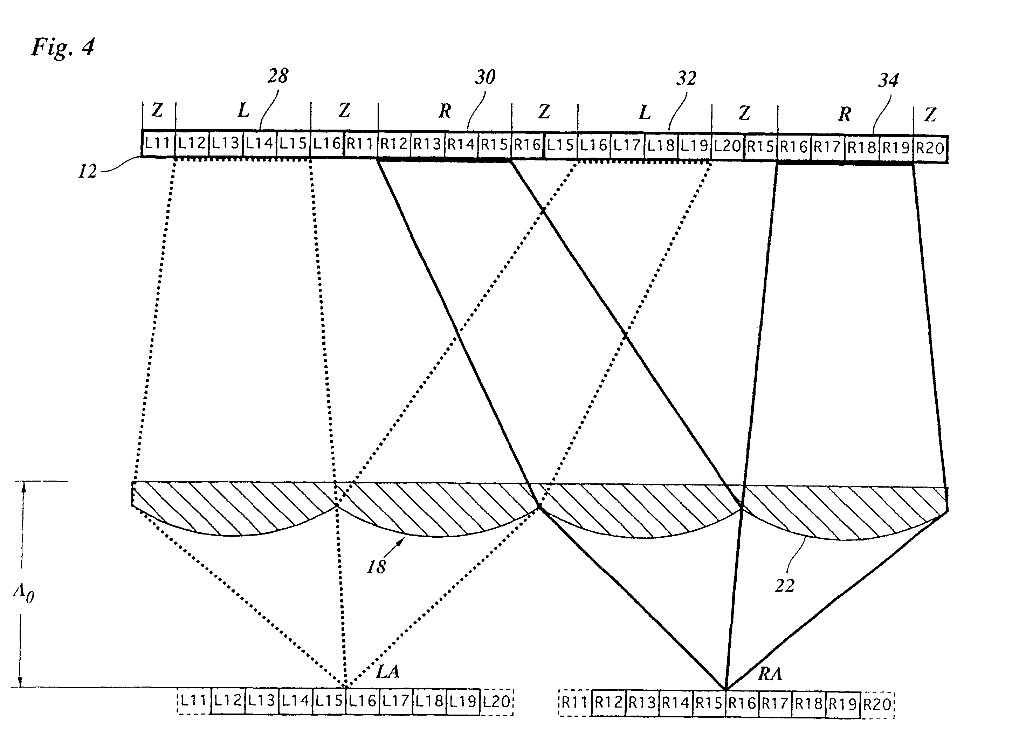

Wenn ausgehend von dem in Fig. 3 gezeigten Zustand der Betrachtungsabstand A wieder vergrößert wird, rücken die Zonen L und R auseinander, so daß zwischen ihnen neue Zwischenzonen entstehen, während die ursprünglich vorhandenen Zwischenzonen Z schrumpfen. Bei einem optimalen Betrachtungsabstand A₀ in der Mitte zwischen dem Maximalwert und dem Minimalwert befindet sich in zwischen je zwei benachbarten Zonen L und R eine Zwischenzone, die (bei Selektionszahl 3) gerade halb so breit ist wie jede einzelne der Zonen L und R. Dieser Zustand ist stark schematisiert in Fig. 4 dargestellt.

Weiterhin ist in Fig. 4 die auf dem Bildschirm 12 wiedergegebene Bildinformation durch einzelne Pixel L11 bis L20 und R11 bis R20 repräsentiert. Die mit L anfangenden Bezugszeichen kennzeichnen Pixel, die Bildinformationen für das linke Auge enthalten, und die mit R anfangenden Bezugszeichen kennzeichnen Pixel mit Bildinformation für das rechte Auge. Man erkennt. daß die Bildinformationen für das linke und der rechte Auge segmentweise ineinander verschachtelt sind. Die Segmente 28, 30, 32 und 34 sind jeweils durch eine fette Umrahmung der zugehörigen Pixel kenntlich gemacht und haben in der Zeichnung eine Breite von jeweils 6 Pixeln. In der Praxis kann jedoch die Anzahl der Pixel pro Segment wesentlich größer sein. Die Lage der Segmente ist im Idealfall so durch die Position des Linsenrasters 18 und durch die Position der Augen AL, AR bestimmt, daß die Zonen L jeweils mittig in einem Segment aus L-Pixeln und die Zonen R jeweils mittig in einem Segment aus R-Pixeln liegen. Die Segmente erstrecken sich jedoch über die Zonen L und R hinaus in die Zwischenzonen Z und liegen lückenlos aneinander. Entsprechend der Selektionszahl 3 ist ein Drittel der Pixel jedes Segments für das betreffende Auge des Betrachters unsichtbar. Bei dem in Fig. 4 angenommenen Betrachtungsabstand sind die vier mittleren Pixel jedes Segments sichtbar, während die beiden am Rand des Segments liegenden Pixel unsichtbar sind.

An den Positionen der Augen LA und RA sind in Fig. 4 jeweils in einem Balken diejenigen Pixel angegeben, die für das betreffende Auge sichtbar sind. Beispielsweise sieht das linke Auge LA die vier mittleren Pixel L12 bis L15 aus dem Segment 28 und die vier mittleren Pixel L16 bis L19 aus dem Segment 32. Aufgrund der Vergrößerungswirkung der Zylinderlinsen 22 scheinen sich diese Pixelfolgen aus je vier Pixeln lückenlos aneinanderzufügen.

Fig. 4 zeigt nur einen kleinen Ausschnitt aus einer Bildzeile. Das Auge LA sieht deshalb auch die jeweils vier mittleren Pixel aus weiteren Segmenten, die in Fig. 4 nicht gezeigt sind. Dies wird unten in Fig. 4 durch die gestrichelt eingezeichneten Pixel L11 und L20 symbolisiert.

Das Segment 28 enthält unsichtbar am rechten Rand in der Zone Z das Pixel L16. Dieses Pixel repräsentiert dieselbe Bildinformation wie das erste sichtbare Pixel L16 aus der nächsten Zone L in Segment 32. Ebenso enthält das unsichtbare Pixel L11 am linken Rand der Zone 28 dieselbe Bildinformation wie das letzte sichtbare Pixel aus dem vorangehenden (in Fig. 4 nicht gezeigten) L-Segment. Umgekehrt enthält das Segment 32 am linken Rand eine Kopie des letzten sichtbaren Pixels L15 aus dem Segment 28 und am rechten Rand eine Kopie eines Pixels L20 aus dem nächstfolgenden L-Segment. Die auf dem Bildschirm 12 dargestellte Bildinformation ist also insofern redundant, als beispielweise die Pixel L15 und L16 zweifach vorhanden sind.

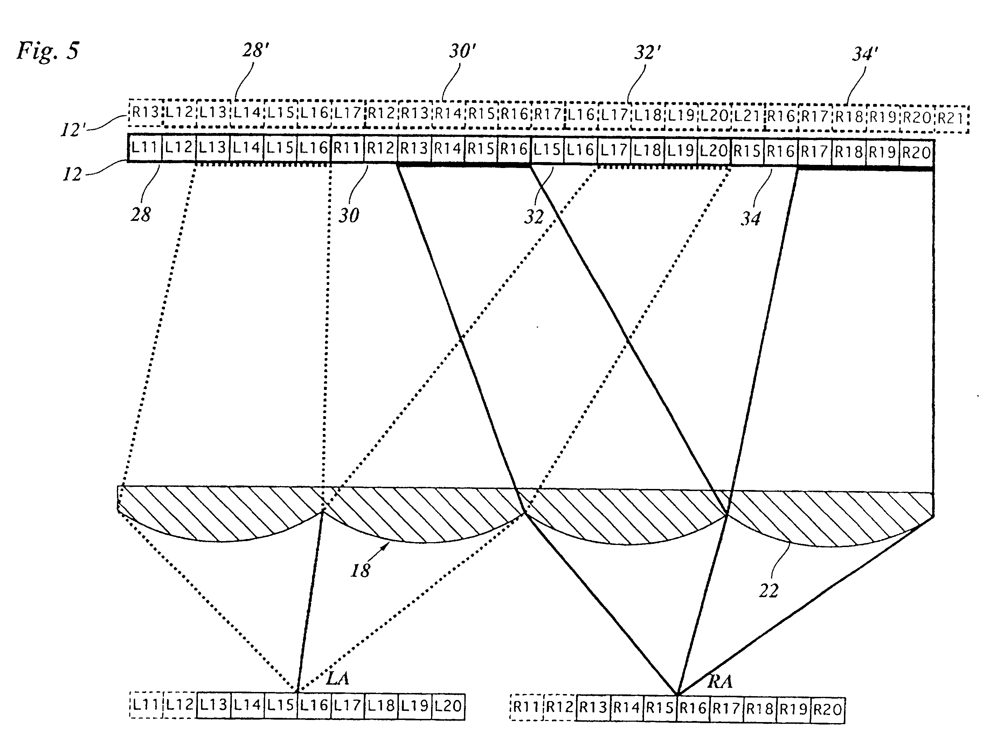

Entsprechend sind auch in den Segmenten 30 und 34 für das rechte Auge die Pixel R15 und R16 zweifach vorhanden. Der Sinn dieser Redundanz ist in Fig. 5 ersichtlich. Dort ist angenommen, daß der Betrachter den Kopf etwas zur Seite bewegt hat, so daß sich die Position der Augen LA und RA etwas nach links verschoben haben. Entsprechend haben sich die sichtbaren Zonen auf dem Bildschirm 12 nach rechts verschoben. Das linke Auge LA kann deshalb jetzt das Pixel L16 im Segment 32 nicht mehr wahrnehmen. Dafür sieht es aber nun das gleiche Pixel L16 am rechten Rand des Segments 28. Entsprechend kann das rechte Auge RA das Pixel R16 im Segment 34 nicht mehr sehen, doch sieht es dafür das Pixel R16 im Segment 30. Ebenso werden die jetzt nicht mehr sichtbaren Pixel L12 und R12 durch die entsprechenden Pixel aus den vorangehenden (nicht gezeigten) Segmenten ersetzt. Obgleich sich die Betrachtungsposition verändert hat. nehmen somit beide Augen noch unverändert dieselben Pixelfolgen wahr wie in Fig.4. Dies wird durch die Balken unten in Fig. 5 illustriert.

Entsprechendes gilt selbstverständlich, wenn der Benutzer den Kopf nach rechts bewegt. Innerhalb eines begrenzten Bereichs kann somit der Benutzer seine Betrachtungsposition in seitlicher Richtung variieren, ohne daß die Qualität der räumlichen Wahrnehmung beeinträchtigt wird. Der Benutzer gewinnt somit eine gewisse Bewegungsfreiheit selbst dann, wenn die Einstellung der Barriere und die auf dem Bildschirm dargestellte Bildinformation nicht verändert werden. Je größer die Selektionszahl der Barriere ist, desto größer ist die gewonnene Bewegungsfreiheit. Bei einer größeren Anzahl von Pixeln pro Segment ist bei unveränderter Selektionszahl auch die Anzahl der redundanten Pixel entsprechend größer.

Wenn der Benutzer in der in Fig. 5 gezeigten Situation den Kopf noch weiter nach links bewegen würde, so würde das linke Auge auch die Pixel R11 und R15 wahrnehmen, die eigentlich für das rechte Auge bestimmt sind, und die Qualität der räumlichen Wahrnehmung würde beeinträchtigt. Da jedoch die Seitwärtsbewegung des Benutzers durch das Eye-Tracking-System 16 erfaßt wird. läßt sich der Bewegungsspielraum des Benutzers dadurch noch weiter vergrößern, daß der auf dem Bildschirm dargestellte Inhalt verändert wird.

Der neue Bildschirminhalt ist in Fig. 5 in einem Balken 12' dargestellt. Man erkennt, daß die Segmente 28', 30', 32' und 34' entsprechend der Augenbewegung um ein Pixel nach rechts verschoben wurden. Andererseits wurde jedoch der Inhalt der Segmente so verändert, daß sich die Pixel L12, L13, etc. noch an den selben Stellen befinden wie zuvor. Lediglich das unsichtbare Pixel L11 am linken Rand des Segments 28 ist in dem neuen Segment 28' nicht mehr enthalten. Dafür enthält das neue Segment 28' am rechten Rand das unsichtbare Pixel L17, das früher nur im Segment 32 enthalten war. Das Pixel L17 ist also jetzt ein redundantes Pixel geworden. Bildlich gesprochen wird der Informationsgehalt jedes Segments entgegengesetzt zur Verschiebe-Richtung des Segments "gescrollt". Das Ergebnis ist, daß im jedem Segment wieder die mittleren vier Pixel sichtbar sind und die Situation hinsichtlich der unsichtbaren Pixel äquivalent zu der Situation in Fig. 4 ist. Der Benutzer kann also den Kopf jetzt noch weiter nach links bewegen, und er wird dennoch unverändert dasselbe räumliche Bild wahrnehmen. Der in Fig. 5 illustrierte Anpassungsvorgang kann entsprechend der weiteren Kopfbewegung des Benutzers beliebig oft wiederholt werden. Da sich der Bildschirminhalt jeweils nur in den unsichtbaren Zwischenzonen Z ändert, ist es für die Bildqualität völlig unschädlich, daß der Anpassungsprozeß zwangsläufig etwas hinter der tatsächlichen Augenbewegung des Benutzers hinterherhinkt.

Wenn der Benutzer den Betrachtungsabstand A variiert, hat dies ebenfalls einen gewissen Einfluß auf die Lage der sichtbaren Zonen auf dem Bildschirm. Insbesondere zeigt ein Vergleich der Figuren 2 und 3, das sämtliche Zonen R, L und Z in Zeilenrichtung gestreckt werden. Dieser Effekt ist jedoch bezogen auf die Weglänge der Kopfbewegung wesentlich weniger ausgeprägt als die Seitwärtsverschiebung der Zonen bei seitlicher Bewegung des Kopfes. Geringfügige Änderungen des Betrachtungsabstands führen deshalb noch nicht zu einer merklichen Beeinträchtigung der Bildqualität. Darüber hinaus besteht im Rahmen der erfindungsgemäßen Verfahrens die Möglichkeit, die Breite der Segmente, d.h., die Anzahl der Pixel pro Segment, an die Änderungen des Betrachtungsabstands anzupassen. Auch in diesem Fall können die unsichtbaren Zwischenzonen analog zu den oben beschriebenen Verfahren mit redundanten Pixeln aufgefüllt werden. Allerdings ergeben sich gewisse Einschränkungen daraus, daß bei nichtoptimalem Betrachtungsabstand die beiden Zwischenzonen Z, die jede Zone L oder R flankieren, nicht mehr dieselbe Breite haben, so daß an einem Ende des Segments der für redundante Pixel verfügbare Raum schrumpft und schließlich bei dem maximalen oder minimalen Betrachtungsabstand auf Null reduziert wird.

Die für die Anpassung für der Segmentbreite an den Betrachtungsabstand notwendigen Informationen über den Betrachtungsabstand können vom Head- oder Eye-Tracking-System geliefert werden.

Statt den auf dem Bildschirm 12 dargestellten Inhalt entsprechend der Seitwärtsbewegung des Kopfes des Betrachters zu variieren, ist es selbstverständlich auch möglich, das Linsenraster 18 mechanisch zu verstellen. In diesem Fall ist die redundante Bildschirmdarstellung gemäß der Erfindung sogar besonders vorteilhaft, da bei der mechanischen Anpassung des Linsenrasters in der Regel mit noch größeren zeitlichen Verzögerungen zu rechnen sein wird.

Das Linsenraster 18 kann wahlweise auch durch Fresnel-Linsen oder durch ein System aus holographischen optischen Elementen gebildet werden.

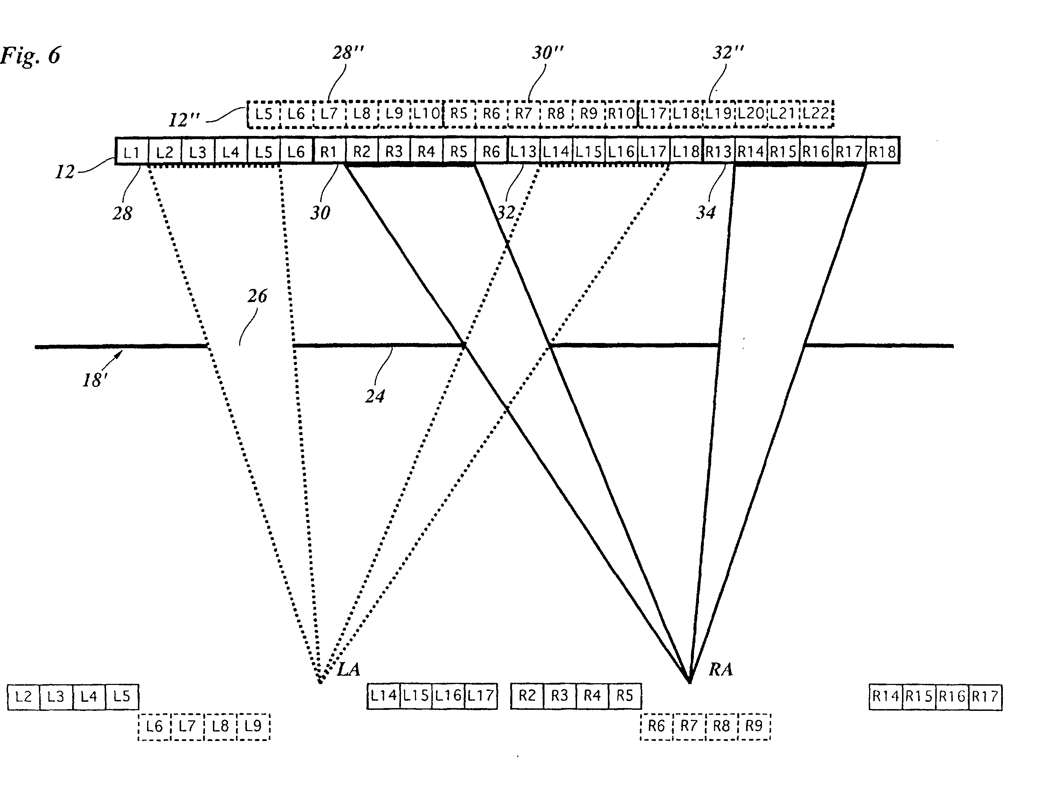

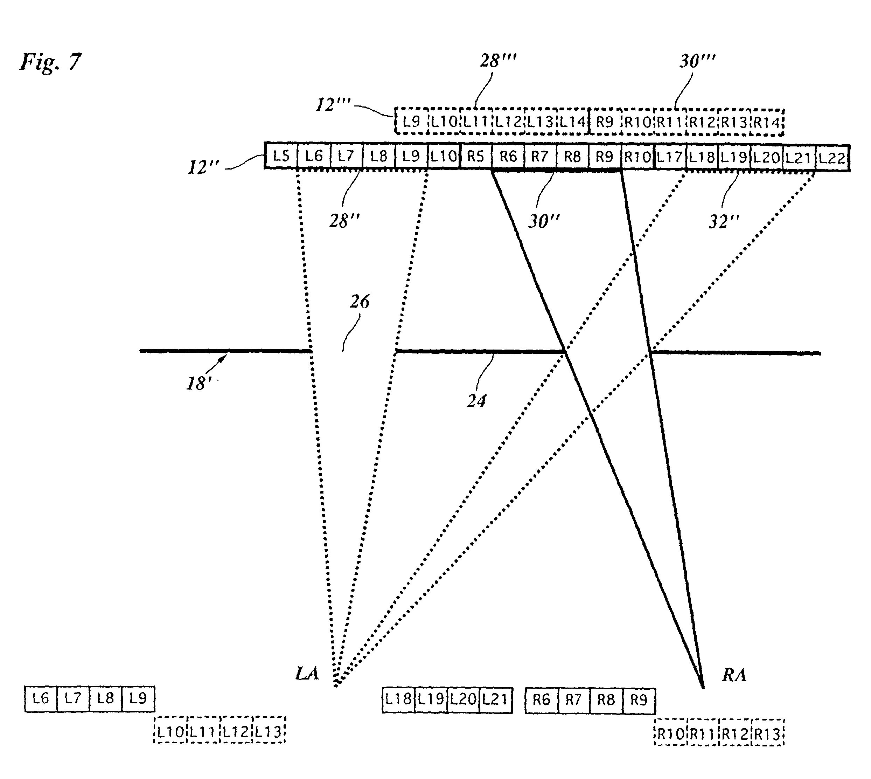

Figuren 6 und 7 illustrieren eine Ausführungsform, bei der Analog zu dem in PCT/EP98/02869 beschriebenen Verfahren mit einem Blendenraster 18' anstelle eines Linsenrasters gearbeitet wird. Das Blendenraster wird durch ein LCD-Filter mit einem feinen Pixelraster gebildet. dessen Pixel sich zwischen transparent und nichttransparent umschalten lassen, so daß ein variables Muster aus Blenden 24 und Schlitzen 26 gebildet werden kann. Da in diesem Fall die Vergrößerungswirkung der Zylinderlinsen entfällt, ist für jedes Auge weniger als die Hälfte des zugehörigen Halbbilds sichtbar. Für die vollständige Darstellung der Bildinformation muß deshalb mit Zeit-Multiplexing gearbeitet werden. Ein Zeit-Multiplex-Zyklus umfaßt drei Phasen, die einander zyklisch abwechseln. Die entsprechenden Bildschirminhalte sind in Figuren 6 und 7 mit 12, 12" und 12"' bezeichnet.

Fig. 6 illustriert die erste Phase des Zeit-Multiplex-Zyklus. Die Blenden 24 und Schlitze 26 geben für das linke Auge den Blick auf die Pixel L2 bis L5 und L14 bis L17 in den Segmenten 28 und 32 und für das rechte Auge die Pixel R2 bis R5 und R14 bis R17 in den Segmenten 30 und 34 frei. Die aus den verschiedenen Segmenten stammenden Gruppen von je vier Pixeln werden jetzt jedoch unvergrößert wahrgenommen und bilden deshalb eine lückenhafte Folge, wie unten in Fig. 6 durch die in durchgezogenen Linien eingezeichneten Pixel illustriert wird. Die zwischen den Pixelfolgen bestehenden Lücken werden in der zweiten Phase des Zyklus durch die in Fig. 6 gestrichelt eingezeichneten Pixel und in der dritten Phase durch die in Fig. 7 gestrichelt eingezeichneten Pixel aufgefüllt, so daß aufgrund der Trägheit des Auges der Eindruck einer durchgehenden Pixelfolge entsteht.

Fig. 7 zeigt den Zustand des Blendenrasters 18' in der zweiten Phase des Zyklus. Die Blenden 24 und Schlitze 26 sind jetzt um ein Drittel des Rastermaßes nach rechts versetzt. Auf dem Bildschirm werden in dieser Phase die in Fig. 7 in durchgezogenen Linien eingezeichneten Segmente 28", 30" und 32" dargestellt (das Segment 34" ist aus Platzgründen nicht gezeigt). Die Segmente 28"' und 30"' für die dritte Phase des Zyklus sind in gestrichelten Linien angegeben. Das Blendenraster 18' ist in der dritten Phase erneut um ein Drittel des Rastermaßes verschoben.

Die redundante Anordnung der Pixel in den Segmenten entspricht sinngemäß dem zuvor beschriebenen Ausführungsbeispiel. So werden beispielsweise in der ersten Phase in dem Segment 28 am rechten Rand die Pixel L5 und L6 wiedergegeben, die die selbe Bildinformation beinhalten wie die ersten beiden Pixel in dem Segment 28", das in der zweiten Phase sichtbar ist.

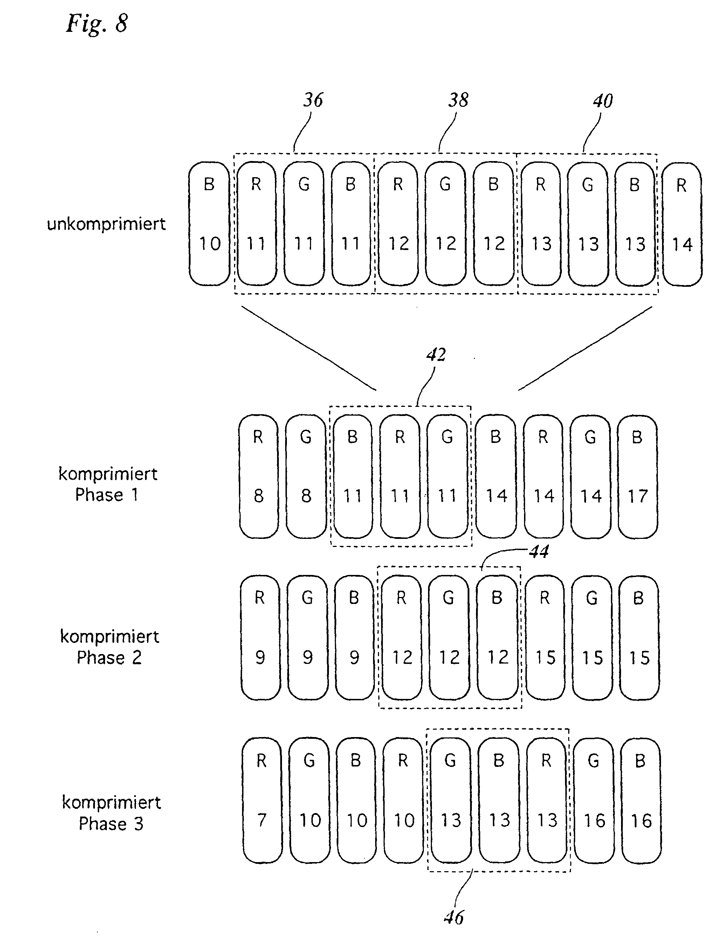

Wenn es sich bei dem Bildschirm 12 um einen Farbbildschirm handelt, treten an die Stelle der bisher als "Pixel" bezeichneten Objekte Farbtripletts, die jeweils durch drei Farbpixe in den Grundfarben Rot. Grün und Blau gebildet werden. Bei einem typischen CRT- oder LCD-Farbbildschirm haben die Farbpixel die Form länglicher Spalten, die periodisch in der Reihenfolge R-G-B-R-G-.... in einer Zeile angeordnet sind. wie im oberen Teil in Fig. 8 gezeigt ist. Je drei solcher Farbpixel bilden ein Triplett, daß bezüglich der Bildinformation als eine Einheit zu betrachten ist, da die Helligkeitsverhältnisse der Farbpixel den Farbton des betreffenden Farbbildelementes festlegen.

Im oberen Teil der Fig. 8 sind drei nebeneinanderliegende Farbtripletts 36. 38 und 40 gezeigt, wie sie auf einem normalen Farbbildschirm erscheinen würden. Wenn jedoch bei dem in Figuren 2 bis 5 gezeigten Verfahren mit Hilfe der Zylinderlinsen 22 das Bild in Zeilenrichtung um den Faktor 3 vergrößert wird, so muß die Bildinformation zuvor um diesen Faktor gestaucht werden. damit das vollständige Bild auf dem Bildschirm wiedergegeben werden kann. Da die Auflösung des Bildschirms durch die Größe der Farbtripletts bestimmt ist, führt diese Bildtransformation grundsätzlich zu einem Informationsverlust. Fig. 8 zeigt jedoch ein Verfahren, mit dem sich dieser Informationsverlust durch geschickte Ansteuerung der einzelnen Farbpixel des Bildschirms vermeiden oder zumindest mildern läßt. Dies ist sowohl bei einer Kathodenstrahlröhre durch geeignete Modulation des Elektronenstrahls als auch bei einem LCD-Bildschirm durch entsprechende Ansteuerung der einzelnen LCD-Elemente möglich.

Die Bildinformation, die ursprünglich in den drei Tripletts 36, 38, 40 enthalten war, repräsentiert drei Farb-Bildelemente, die in Fig. 8 die Nummern 11, 12 und 13 haben. Diese Bildinformation wird nun in einem Zeitmultiplex-Verfahren mit einem aus drei Phasen bestehenden Zyklus auf dem Bildschirm wiedergegeben, wie im unteren Teil der Fig. 8 dargestellt ist. In Phase 1 werden drei Farbpixel BRG zu einem Triplett 42 zusammengefaßt, dessen Mittelpunkt der Position des linken Farbpixels R in dem Triplett 38 entspricht. Daher wird in dem Triplett 42 die Farbinformation des Bildpunktes 11 vollständig wiedergegeben.

In Phase 2 wird die Farbinformation des Bildpunktes 12 in einem Triplett 44 wiedergegeben, daß die Farbpixel RGB umfaßt und dessen Schwerpunkt der Position des mittleren Farbpixels G in dem Triplett 38 entspricht.

Schließlich wird in Phase 3 die Information des Bildpunktes 13 in einem durch die Farbpixel G, B, R gebildeten Triplett 46 wiedergegeben, dessen Schwerpunkt der Position des rechten Farbpixels B in dem Triplett 38 entspricht.

Wenn der Zyklus mit diesen drei Phasen in rascher Folge wiederholt wird. entsteht für den Betrachter der Eindruck, als sei das Bild ohne Detailverlust auf ein Drittel der ursprünglichen Breite gestaucht worden. Bei Betrachtung durch die Zylinderlinse 22 wird das Bild dann wieder auf die ursprüngliche Größe gedehnt.

Zwar läßt sich durch dieses Verfahren nicht verhindern, daß das Raster der Farbpixel aufgrund der Vergrößerungswirkung der Zylinderlinsen vergröbert erscheint, doch kann eine größere Detailfülle des Bildes erreicht werden als bei einer einfachen Unterdrückung von zweien der ursprünglich drei Bildpunkte 11, 12 und 13 oder bei einer arithmetischen oder zeitlichen Mittelung der Informationsgehalte dieser Bildpunkte.

Nachfolgend werden die wesentlichen Daten für verschiedene praktische Realisierungsbeispiele der Vorrichtung angegeben. Als Barriere soll jeweils ein Linsenraster verwendet werden. Da die Teilung des Linsenrasters (die Breite einer einzelnen Zylinderlinse) in diesem Fall nicht variabel ist, sind die Ober- und Untergrenzen für den Betrachtungsabstand vom jeweiligen Augenabstand des Benutzers abhängig. In den Beispielen wird ein Augenabstand von 65 mm angenommen.

### 15"-LCD-Bildschirm

Der Bildschirm ist ein LCD-Bildschirm in TFT- (Thin Film Transistor) Bauweise mit einer sichtbaren Bildschirmdiagonale von 38 cm und einer maximalen Auflösung von 1024 mal 768 Pixel. Ein einzelnes Farbtriplett hat dann eine Breite von 0,25 mm. Es gelten die folgenden Daten:
Selektionszahl: 3.0
Teilung des Linsenrasters: 15,0 mm
Abstand zwischen Bildschirm und Linsenraster: 60 mm
Maximaler Betrachtungsabstand: 720 mm
Minimaler Betrachtungsabstand: 330 mm

Aufgrund der Vergrößerungswirkung der Zylinderlinsen beträgt die scheinbare Breite eines Farbtripletts 0.75 mm. Das entspricht der Auflösung einer üblichen Fernsehbildröhre. Die subjektiv wahrgenommene Auflösung ist jedoch - insbesondere bei Verwendung des in Fig. 8 illustrierten Verfahrens - wesentlich höher.

### 21"-CRT-Bildschirm

Als Bildschirmgerät wird eine Kathodenstrahl-Farbbildröhre mit einer Bildschirmdiagonale von 53 cm verwendet. Die Auflösung beträgt 1410 mal 1054 Pixel, entsprechend einer Breite eines einzelnen Farbtripletts von 0.28 mm.
Selektionszahl: 2.2
Teilung des Linsenrasters: 11,0 mm
Abstand zwischen Bildschirm und Linsenraster: 60 mm
Maximaler Betrachtungsabstand: 720 mm
Minimaler Betrachtungsabstand: 590 mm
Scheinbare Breite eines Farbtripletts: 0,62 mm

Aufgrund der horizontalen Stauchung des Bildes um den Faktor 1/2,2 ergibt sich eine effektive Auflösung von 640 mal 1054 Pixel.

### 40"-Rückprojektionsbildschirm

Als Bildschirm wird ein Rückprojektionsbildschirm mit einer sichtbaren Bildschirmdiagonale von 101,6 cm und einer Auflösung von 1218 mal 1024 Pixel verwendet.
Selektionszahl: 3,0
Teilung des Linsenrasters: 15.0 mm
Abstand zwischen Bildschirm und Linsenraster: 100 mm
Maximaler Betrachtungsabstand: 1.200 mm
Minimaler Betrachtungsabstand: 550 mm

Die Breite eines Pixels würde 0,67 mm und nach Vergrößerung um den Faktor 3 etwa 2 mm betragen, doch ist das Pixelraster aufgrund des Prinzips der Rückprojektion für den Betrachter nicht wahrnehmbar.

Bei den oben beschriebenen Realisierungen kann jeweils ein bekanntes Head-Tracking-System oder Eye-Tracking-System oder ggf. auch ein fortgeschrittenes Gaze-Tracking-System eingesetzt werden, bei dem auch erfaßt wird. welcher Punkt auf dem Bildschirm gerade durch den Betrachter fixiert wird.

Im einfachsten Fall ist das auf dem Bildschirm dargestellte dreidimensionale Bild des Objekts von der erfaßten Betrachtungsposition unabhängig. Es ist jedoch auch möglich, den Bildinhalt in Abhängigkeit von der erfaßten Betrachtungsposition dynamisch zu variieren, so daß die Änderungen der Perspektive simuliert werden können, die sich bei Betrachtung eines realen Objekts aus unterschiedlichen Positionen ergeben würden.

## Patentansprüche

1. Verfahren zur autostereoskopischen Darstellung von Bildern auf einem Bildschirm (12), bei dem die Bildinformation für das rechte Auge (RA) und das linke Auge (LA) eines Betrachters segmentweise verschachtelt auf dem Bildschirm dargestellt wird und eine Barriere (18; 18') so angeordnet wird, daß für jedes Auge jeweils nur die zugehörige Bildinformation sichtbar ist, **dadurch gekennzeichnet, daß** in jedem Segment (28) zusätzlich zu der diesem Segment zugeordneten Bildinformation (L12-L15; L2-L5) eine Kopie eines Teils der Bildinformation (L11, L16; L1, L6) dargestellt wird, die einem oder beiden benachbarten Segmenten (32; 28") für dasselbe Auge zugeordnet ist.

2. Verfahren nach Anspruch 1, **dadurch gekennzeichnet, daß** die Position des Kopfes oder der Augen des Betrachters fortlaufend erfaßt wird und das die Position der Barriere (18; 18') relativ zum Bildschirm (12) und/oder die Position der dargestellten Bildinformation auf dem Bildschirm in Abhängigkeit von der erfaßten Betrachtungsposition variiert wird.

3. Verfahren nach Anspruch 2, **dadurch gekennzeichnet, daß** bei einer erfaßten Seitwärtsbewegung des Kopfes des Betrachters die Barriere (18; 18') ortsfest bleibt und auf dem Bildschirm (12) die Grenzen zwischen den Segmenten (28, 30, 32, 34) verschoben werden, wobei die Bildinformation auf dem Bildschirm nur in den für beide Augen unsichtbaren Zonen (Z) in der Umgebung der Segmentgrenzen verändert wird.

4. Verfahren nach einem vorstehenden Ansprüche, **dadurch gekennzeichnet, daß** als Barriere ein Linsenraster (18) verwendet wird, dessen einzelne Linsen (22) das auf dem Bildschirm dargestellte Bild zumindest in Zeilenrichtung um einen vorgegebenen Faktor vergrößern, und daß die ineinander verschachtelten Bildinformationen für das linke und das rechte Auge auf dem Bildschirm in einer in Zeilenrichtung um diesen Faktor komprimierten Form dargestellt werden.

5. Verfahren nach Anspruch 4, bei dem das Bild auf einem Farbbildschirm mit in Zeilenrichtung versetzt angeordneten Farbpixeln (R,G,B) dargestellt wird, **dadurch gekennzeichnet, daß** die Bildinformation für drei nebeneinanderliegende, jeweils einen farbigen Bildpunkt bildende Farbtripletts (42, 44, 46) im Zeitmultiplex-Verfahren auf dem Bildschirm dargestellt wird, wobei die drei Farbpixel, die zur Darstellung eines Farbtripletts zusammengefaßt werden, jeweils um ein Farbpixel gegeneinander versetzt sind.

6. Vorrichtung zur autostereoskopischen Darstellung von Bildern, mit einem durch einen Rechner (10) angesteuerten Bildschirm (12), auf dem die Bildinformation für das rechte Auge (RA) und das linke Auge (LA) eines Betrachters, gesteuert durch den Rechner (10), segmentweise verschachtelt dargestellt wird, und mit einer Barriere (18; 18'), die so vor dem Bildschirm (12) angeordnet ist, daß für jedes Auge jeweils nur die zugehörigen Bildinformation sichtbar ist, **dadurch gekennzeichnet, daß** der Rechner (10) dazu ausgebildet ist, in jedem Segment (28) zusätzlich zu der diesem Segment zugeordneten Bildinformation (L12-L15; L2-L5) eine Kopie eines Teils der Bildinformation (L11, L16; L1, L6) darzustellen, die einem oder beiden benachbarten Segmenten (32; 28") für dasselbe Auge zugeordnet ist.

7. Vorrichtung nach Anspruch 6. **dadurch gekennzeichnet, daß** die Barriere ein Linsenraster (18) ist und daß der Abstand zwischen dem Linsenraster (18) und dem Bildschirm (12) und die Abbildungseigenschaften der Linsen (22) so an einen vorgegebenen Betrachtungsabstand (A₀) angepaßt sind, daß die ineinander verschachtelten Segmente (28, 30, 32, 34) auf dem Bildschirm jeweils durch eine Zwischenzone (Z) voneinander getrennt sind, die für beide Augen unsichtbar ist.

8. Vorrichtung nach Anspruch 7, **gekennzeichnet durch** ein an den Rechner (10) angeschlossenes Head- oder Eye-Tracking-System (16) zur Erfassung der von einem Betrachter eingenommenen Betrachtungsposition und zur Anpassung der dargestellten Bildinformation an diese Hetrachtungsposition.

## Claims

1. Method for the autostereoscopic representation of images on an image screen (12), in which method the image information for the right eye (RE) and the left eye (LE) of a viewer is represented on the image screen in a manner. interlaced segment-wise and a barrier (18; 18') is so arranged that, for each eye, only the respective associated image information is visible, **characterised in that** there is represented in each segment (28), in addition to the image information (L12-L15; L2-L5) associated with that segment, a copy of a portion of the image information (L11, L16; L1, L6) which is associated with one or both adjacent segments (32; 28") for the same eye.

2. Method according to claim 1, **characterised in that** the position of the head or the eyes of the viewer is detected continuously and **in that** the position of the barrier (18; 18') relative to the image screen (12) and/or the position of the represented image information on the image screen is varied in dependence on the detected viewing position.

3. Method according to claim 2, **characterised in that**, when a sideways movement of the head of the viewer is detected, the barrier (18; 18') remains stationary and the boundaries between the segments (28, 30, 32, 34) are displaced on the image screen (12), the image information on the image screen being altered only in the zones (Z) invisible to both eyes in the environment of the segment boundaries.

4. Method according to any one of the preceding claims, **characterised in that** a lens raster (18) whose individual lenses (22) magnify the image represented on the image screen, at least in the line direction, by a predetermined factor, is used as the barrier, and **in that** the mutually interlaced image data for the left and the right eye are represented on the image screen in a form compressed by that factor in the line direction.

5. Method according to claim 4, in which the image is represented on a colour image screen with colour pixels (R,G,B) arranged in a staggered manner in the line direction, **characterised in that** the image information for three adjacent colour triplets (42, 44, 46) each forming a coloured picture element is represented on the image screen by the time-multiplex method, the three colour pixels which are combined to represent a colour triplet being staggered relative to one another in each case by a colour pixel.

6. Device for the autostereoscopic representation of images, having an image screen (12) which is controlled by a computer (10) and on which the image information for the right eye (RE) and the left eye (LE) of a viewer is represented, under the control of the computer (10), in a manner interlaced segment-wise, and having a barrier (18; 18') which is arranged in front of the image screen (12) in such a manner that, for each eye, only the respective associated image information is visible, **characterised in that** the computer (10) is constructed for the purpose of representing, in each segment (28), in addition to the image information (L12-L15; L2-L5) associated with that segment, a copy of a portion of the image information (L11, L16; L1, L6) which is associated with one or both adjacent segments (32; 28") for the same eye.

7. Device according to claim 6, **characterised in that** the barrier is a lens raster (18) and **in that** the distance between the lens raster (18) and the image screen (12), and the focusing properties of the lenses (22) are so adapted to a predetermined viewing distance (A₀) that the mutually interlaced segments (28, 30, 32, 34) on the image screen are separated from one another in each case by an intermediate zone (Z) which is invisible to both eyes.

8. Device according to claim 7, **characterised by** a head- or eye-tracking system (16), connected to the computer (10), for detecting the viewing position assumed by a viewer and for adapting the represented image information to that viewing position.

## Revendications

1. Procédé de représentation autostéréoscopique d'images sur un écran (12), dans lequel la formation d'images pour l'oeil droit (RA) et l'oeil gauche (LA) d'un observateur est représentée sur l'écran par des segments imbriqués, et une barrière (18 ; 18') est disposée de manière que pour chaque oeil seule l'information d'image correspondante soit visible, **caractérisé en ce que** dans chaque segment (28), outre l'information d'image (L12-L15 ; L2-L5), affectée à ce segment, est représentée une copie d'une partie de l'information d'image (L11-L16 ; L1-L6) qui est affectée à un ou aux deux segments (32 ; 28") voisins pour le même oeil.

2. Procédé selon la revendication 1, **caractérisé en ce que** la position de la tête ou des yeux de l'observateur est détectée en permanence et **en ce qu'**on fait varier la position de la barrière (18 ; 18') par rapport à l'écran (12) et/ou la position de l'information d'image représentée sur l'écran en fonction de la position d'observation détectée.

3. Procédé selon la revendication 2, **caractérisé en ce que** dans le cas où l'on détecte un mouvement vers le côté de la tête de l'observateur, la barrière (18 ; 18') reste fixe et sur l'écran (12) les limites entre les segments (28, 30, 32, 34) sont déplacées, l'information d'image sur l'écran n'étant modifiée que dans les zones (Z), non visibles par les deux yeux, au voisinage des limites des segments.

4. Procédé selon une revendication précédente, **caractérisé en ce qu'**on utilise comme barrière une grille de lentilles (18) dont les différentes lentilles (22) agrandissent l'image représentée sur l'écran, au moins dans la direction des lignes, d'un facteur prédéfini, et **en ce que** les informations d'image imbriquées les unes dans les autres pour l'oeil gauche et l'oeil droit sont représentées sur l'écran sous une forme comprimée de ce facteur dans la direction des lignes.

5. Procédé selon la revendication 4, dans lequel l'image est représentée sur un écran couleur avec des pixels de couleur (R, G, B) disposés décalés dans la direction des lignes, **caractérisé en ce que** l'information d'image est représentée sur l'écran pour trois triplets de couleurs (42, 44, 46) juxtaposés, formant chacun un point d'image couleur, par un procédé de multiplexage dans le temps, les trois pixels de couleur, qui sont réunis pour représenter un triplet couleur, étant décalés chaque fois l'un par rapport à l'autre d'un pixel couleur.

6. Dispositif de représentation autostéréoscopique d'images comportant un écran (12) commandé par un calculateur (10), sur lequel l'information d'image pour l'oeil droit (RA) et l'oeil gauche (LA) d'un observateur, est représentée par segments imbriqués, de manière commandée par le calculateur (10), et comportant un barrière (18 ; 18') qui est disposée devant l'écran (12) de manière que pour chaque oeil seule l'information d'image correspondante soit visible, **caractérisé en ce que** le calculateur (10) est conçu pour représenter dans chaque segment (28), outre l'information d'image (L12-L15 ; L2-L5) affectée à ce segment, une copie d'une partie de l'information d'image (L11-L16 ; L1-L6) qui est affectée à un ou aux deux segments (32 ; 28") voisins pour le même oeil.

7. Dispositif selon la revendication 6, **caractérisé en ce que** la barrière est une grille de lentilles (18) et **en ce que** la distance entre la grille de lentilles (18) et l'écran (12) et les propriétés de reproduction des lentilles sont adaptées à une distance d'observation (A₀) prédéfinie de manière que les segments (28, 30, 32, 34) imbriqués les uns dans les autres soient séparés les uns des autres sur l'écran par une zone intermédiaire (Z) respective qui est invisible aux deux yeux.

8. Dispositif selon la revendication 7, **caractérisé par** un système de poursuite de tête ou d'yeux (16) pour détecter la position d'observation prise par un observateur et pour adapter l'information d'image représentée à cette position d'observation.
